# EUROPÄISCHE PATENTANMELDUNG

(11) **EP 3 733 582 A1**
(43) Veröffentlichungstag der Anmeldung: **04.11.2020**
(21) Anmeldenummer: 20164444.0
(22) Anmeldetag: 20.03.2020
(51) Int. Cl.: B66B 5/00

(54) **SCHACHTTRENNELEMENT**

(30) Priorität: 22.03.2019 AT 3519 U
(71) Anmelder: InoVA Solutions GmbH, 8142 Wundschuh (AT)
(72) Erfinder: Thomasser, Markus, A - 8200 GLEISDORF (DE); Kerubichler, Markus, A - 8072 MELLACH (DE)
(74) Vertreter: Ellmeyer, Wolfgang

(57) **Zusammenfassung**

Schachttrennelement (1) zum Einbau in einen Schacht, der mehrere voneinander beabstandete Schachtquerträger (25, 26, 27) aufweist, wobei das Schachttrennelement (1) aus einem hochreißfesten Membranelement (5, 5') gebildet ist, das zwischen jeweils zwei Schachtquerträger (25, 26, 27) einspannbar ist, um jeweils die dazwischenliegende Durchgangsöffnung abzudecken, und dass eine Klemmvorrichtung (6) zum Klemmen des Membranelements (5, 5') an einer Seite und eine Spannvorrichtung (7) zum Spannen des Membranelements (5, 5') an der gegenüberliegenden anderen Seite vorgesehen sind.

## Beschreibung

Die Erfindung betrifft ein Schachttrennelement zum Einbau in einen Schacht, der mehrere voneinander beabstandete Schachtquerträger aufweist.

In größeren Gebäuden sind vielfach Aufzugsschächte vorgesehen, in denen mehr als eine Aufzugsanlage in ein und demselben Schacht untergebracht sind. Die Erfindung ist aber nicht auf die Verwendung in einem Aufzugsschacht beschränkt, vielmehr kann diese auch in anderen Schächten zur Anwendung gelangen.

Üblicherweise sind Aufzugsanlagen nebeneinander angeordnet, in Sonderfällen können die Aufzugsanlagen auch Rücken an Rücken angeordnet sein. Die Aufzugsanlage wird bei Mehr-Gruppenaufzügen normalerweise auf Stahlquerträger montiert, welche in durch die Statik bestimmten Abständen zwischen den jeweils benachbarten Aufzugsanlagen horizontal an der vorderen und hinteren Schachtwand befestigt sind. Der Abstand dieser Schachtquerträger im Schacht zueinander ist meist gleichbleibend, bei Bestandsanlagen auch unterschiedlich. Nur in der Schachtgrube und im Schachtkopf kommt aus statischen Gründen ein davon abweichendes Abstandsmaß zur Anwendung.

Zur Trennung der Aufzüge wurden bisher Lochbleche, Vollwandkonstruktionen oder drahtzaunähnliche Konstruktionen verwendet, welche sperrig sind und für die der Einbau mit einem hohen Aufwand verbunden ist.

Aufgabe der Erfindung ist es, ein Schachttrennelement anzugeben, dass in seinen Dimensionen auf einfache Weise anpassbar ist und eine einfache und rasche Montage ermöglicht.

Erfindungsgemäß wird dies dadurch erreicht, dass das Schachttrennelement aus einem hochreißfesten Membranelement gebildet ist, das zwischen jeweils zwei Schachtquerträger einspannbar ist, um jeweils die dazwischenliegende Durchgangsöffnung abzudecken, und dass eine Klemmvorrichtung zum Klemmen des Membranelements an einer Seite und eine Spannvorrichtung zum Spannen des Membranelements an der gegenüberliegenden anderen Seite vorgesehen sind.

Die erfindungsgemäß zwischen jeweils zwei Schachtquerträgern eingespannte hochreißfeste Membran ermöglicht einen sehr guten Schutz gegen einen Durchgriff oder gegen Fall in den benachbarten Schachtteilraum. Die Befestigung der Membran umfasst ein Klemmen der Membran z.B. an der oberen Seite und ein gleichzeitiges Spannen an der unteren Seite. Die Bezeichnung "oben" und "unten" bezieht sich auf die Lage bei Verwendung des erfindungsgemäßen Schachttrennelements, es kann aber auch die Spannvorrichtung oben und die Klemmvorrichtung unten angeordnet sein, im Rahmen der Erfindung kann z.B. auch eine seitliche Anbringung der Spannvorrichtung und der Trennvorrichtung vorgesehen sein und es gilt hinsichtlich der Anordnung oder Orientierung von Spannvorrichtung und Trennvorrichtung keine Einschränkung.

Als Material für die erfindungsgemäße Membran kann z.B. ein hochreißfestes, brandbeständiges Gewebe vorgesehen sein, das ein Durchgreifen verhindert und die Kräfte gemäß DIN 81-20 aufnehmen kann.

Gemäß einer bevorzugten Ausführungsform kann das Membranelement an der einen Seite mittels der Klemmvorrichtung an einen der Schachtquerträger klemmbar und an der gegenüberliegenden anderen Seite mittels der Spannvorrichtung am benachbarten Schachtquerträger spannbar sein.

Durch das Einklemmen des Membranelements an der einen Seite und das Spannen an der gegenüberliegenden Seite kann ein einfaches Trennelement-System ausgebildet sein, das einfach zu bedienen ist und Kosten spart.

In Weiterbildung der Erfindung kann die Klemmvorrichtung eine Klemmschiene umfassen, mit der das Membranelement klemmbar ist, wodurch eine ausreichend große Fläche des Membranelements der Klemmspannung ausgesetzt werden kann.

Gemäß einer weiteren Ausführungsform der Erfindung kann die Klemmschiene mehrere beabstandete Löcher aufweisen und entsprechende Löcher auf dem Membranelement und den Schachtquerträgern vorgesehen sein, sodass das Membranelement zusammen mit der Klemmschiene durch Gewindebolzen an den Schachtquerträger klemmbar sind. Die Klemmschiene verteilt die auszuübende Klemmkraft auf eine ausreichende Fläche, wodurch vermieden wird, dass bei Aufbringen einer Spannung an dem Membranelement es zu einem Ausreißen der Membran kommen kann, wobei die Klemmschiene gemäß einer weiteren Ausbildung der Erfindung aus einem Flacheisen gebildet sein kann.

Als zusätzlichen Schutz gegen eine unerwünschte Verformung der Membran beim Spannvorgang kann ferner vorgesehen sein, dass auf der Klemmseite des Membranelements eine durch Umschlagen und Verschweißen des Membranrandes ausgebildete Tasche (Keder) vorgesehen ist, in welche ein Keder einbringbar ist, um ein Einziehen des Membranelements unter die Klemmschiene zu verhindern.

Gemäß einer weiteren Ausbildung der Erfindung kann auf der Spannseite des Membranelements eine durch Umschlagen und Verschweißen des Membranrandes ausgebildete Lasche vorgesehen sein, wobei quer zur Längsachse der Lasche ausgebildete, parallele Langlochausschnitte ausgebildet sind, in die Ringschrauben, welche jeweils einen Ringkopf und einen Gewindebolzen umfassen, mit ihrem Ringkopf einlegbar sind, sodass ein Rundstab durch die Lasche und die Ringköpfe hindurchführbar ist und die zugehörigen Gewindebolzen durch Löcher in dem Schachtquerträger einführbar sind, wo sie mit Muttern an der Unterseite des Schachtquerträgers anziehbar sind, wodurch die Membranspannung einstellbar ist.

Die auf diese Weise ausgebildete Lasche ermöglicht das Einbringen eines starren Elements in Form des Rundstabs, über den die erforderliche Spannung auf die Membran übertragbar ist.

Über die Langlochausschnitte sind mehrere Punkte vorgesehen, an denen Spannschrauben am Rundstab anbringbar sind, um Spannkräfte verteilt aufzubringen.

In weiterer Ausbildung der Erfindung kann schließlich vorgesehen sein, dass das Membranelement jeweils randseitig mit einer oder mehreren Laschen an einer benachbarten Schachtwand befestigbar ist, um ein seitliches Durchfallen von Objekten verhindert wird.

Die Laschen können z.B. auf halber Spannhöhe oder Drittel- oder höheren Unterteilungen der Spannhöhe angebracht werden.

Nachfolgend wird die Erfindung anhand der in Zeichnungen dargestellten Ausführungsbeispiele eingehend erläutert. Es zeigt dabei
Fig.1 eine Draufsicht auf eine Ausführungsform eines erfindungsgemäßen Schachttrennelements;
Fig.2 eine Seitenansicht des Schachttrennelements gemäß Fig.1;
Fig.3, 4 und 5 eine Draufsicht, eine Seitenansicht und eine Vorderansicht einer Klemmschiene für die Ausführungsform gemäß Fig.1;
Fig.6 einen Schnitt durch einen Schachtquerträger mit Teilen einer Spannvorrichtung und einer Klemmvorrichtung für die Ausführungsform gemäß Fig.1;
Fig.7 ein Detail einer Draufsicht auf die Ausführungsform der Seitenlasche des Schachttrennelements gemäß Fig.1;
Fig.8 eine dreidimensionale Innenansicht eines Aufzugsschachtes mit Schachtquerträgern und
Fig.9 eine Vorderansicht der Ausführungsform gemäß Fig.1 im eingespannten Zustand.

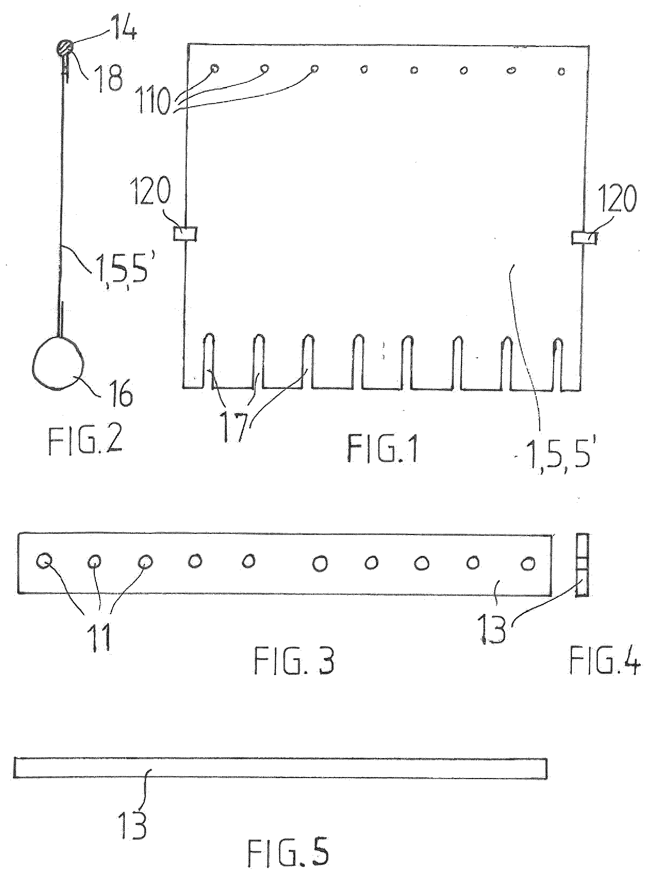

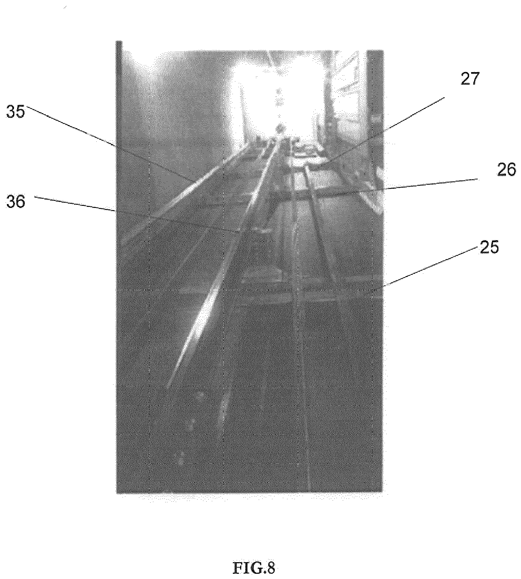

Fig.8 zeigt einen Teil eines beispielhaften Aufzugsschachtes mit vertikalen Führungsschienen 35, 36 und mehreren in Höhenrichtung voneinander beabstandeten, horizontalen Schachtquerträgern 25, 26, 27, die den Innenraum des Schachtes unterteilen, wobei zu beiden Seiten der Schachtquerträger 25, 26, 27 jeweils eine Aufzugsanlage eingebaut ist. Da die benachbarten Aufzugsanlagen parallel betrieben werden, ist zu deren räumlicher Trennung erfindungsgemäß ein Schachttrennelement 1 gemäß Fig.1 bis 7 vorgesehen, das aus einem hochreißfesten Membranelement 5 gebildet ist und das zwischen jeweils zwei der Schachtquerträger 25, 26, 27 einspannbar ist, um jeweils die dazwischenliegende Durchgangsöffnung abzudecken. Auf diese Weise kann mit einer Vielzahl von Membranelementen 5 ein durchgängiger Trennschutz zwischen den benachbarten Aufzugsanlagen erreicht werden. Dabei können auch mehrere Aufzugsanlagen angeordnet sein und der Trennschutz auf erfindungsgemäße Weise jeweils zwischen zwei benachbarten Aufzugsanlagen durch Vorsehen von erfindungsgemäßen Membranelementen 5 ausgebildet sein. Das Membranelement 5 hat eine Schutz- und Trennfunktion zu erfüllen und kann aufgrund seiner textilen Natur leicht an unterschiedliche Dimensionen angepasst werden. Das für das Membranelement 5 verwendete Material ist hoch reißfest, brandbeständig (bis B1) und kann in kurzer Zeit montiert werden.

Der Abstand zwischen zwei Schachtquerträgern 25, 26, 27 beträgt z.B. von 100 cm bis 250 cm.

Fig.1 zeigt ein rechteckförmiges Membranelement 5, das aus einem Kunststoffgewebe, z.B. aus einem Polyestergewebe, gegebenenfalls mit einer einseitigen oder beidseitigen Beschichtung aus PVC gebildet sein kann. Als Grundmaterial kann die Membran von vollflächiger Ausführung bis Netzausführung mit einer Maschenweite bis zu 8mm x 8mm zur Ausführung kommen.

Grundvoraussetzung für die erfindungsgemäße Verwendung der Membran ist, dass das Material der Membran Kräfte aufnehmen kann, welche in der DIN 81-20 normiert sind und dass ein Durchgreifen nicht möglich ist. Von der Art kann das Membranmaterial, ohne darauf beschränkt zu sein, ein Polyestergewebe sein. Das Membranmaterial kann aber auch aus einem Edelstahl/Nirosta-Netz - auch ohne Beschichtung - als Grundgewebe ausgebildet sein.

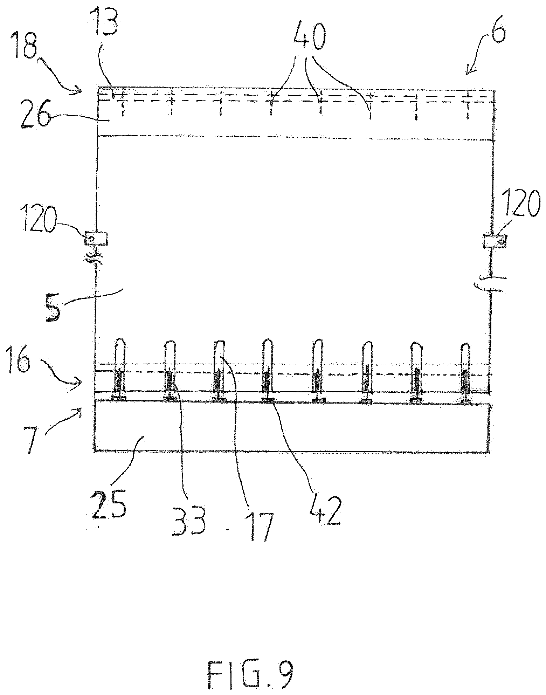

Um das Membranelement 5 bei Verwendung entsprechend zu spannen sind eine Klemmvorrichtung 6 zum Klemmen des Membranelements 5 an einer oberen Seite an den Schachtquerträger 26 und eine Spannvorrichtung 7 zum Spannen des Membranelements 5 an der gegenüberliegenden unteren Seite an dem darunterliegenden Schachtquerträger 25 vorgesehen(Fig.9).

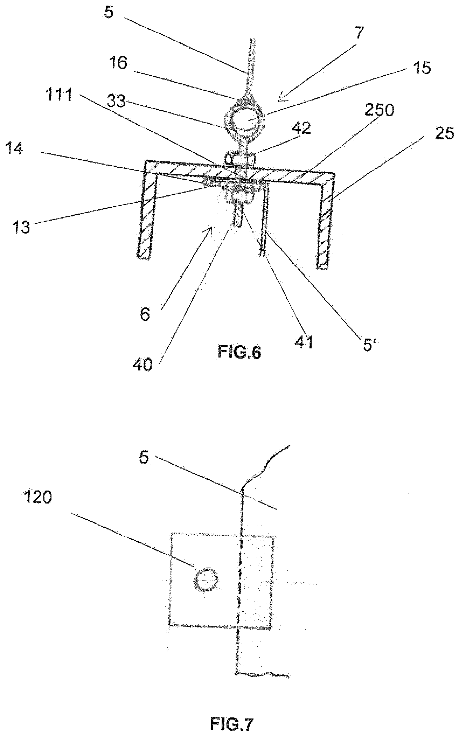

Fig.6 zeigt am Beispiel des Schachtquerträgers 25, dass an seiner Oberseite die Spannvorrichtung 7 für das Membranelement 5 und an seiner Unterseite die Klemmvorrichtung 6 für ein darunterliegendes Membranelement 5' angeordnet sind, wobei die Elemente der oberen Spannvorrichtung 7 und der darunterliegenden Klemmvorrichtung 6 jeweils auf denselben Achsen angeordnet sind.

Bevorzugt weist somit jeder Schachtquerträger 25, 26, 27 an seiner Unterseite die jeweilige Klemmvorrichtung 6 und an seiner Oberseite die Spannvorrichtung 7 auf, wodurch das Membranelement 5, 5' an seinem oberen Randbereich mit der Klemmvorrichtung 6 geklemmt und an seinem unteren Randbereich mit der jeweiligen Spannvorrichtung 7 des darunter angeordneten Schachtquerträgers (nicht abgebildet) gespannt wird. Auf diese Weise können eine Vielzahl von Membranelementen über die gesamte Höhe des Aufzugsschachtes verteilt werden, um eine durchgehende Abdeckung zu erzielen.

In Fig.6 ist der Schachtquerträger 25 im Querschnitt gezeigt, der durch ein umgekehrtes U-Profil mit einem Mittelsteg 250 gebildet ist. Es können im Rahmen der Erfindung auch anders aufgebaute Schachquerträger zum Einsatz gelangen. An dem Mittelsteg 250 ist an der Unterseite das Membranelement 5' mittels der Klemmvorrichtung 6 an den Schachtquerträger 25 geklemmt und an der Oberseite des Mittelstegs 250 das weitere Membranelement 5 mittels der Spannvorrichtung 7 spannbar.

Die Klemmvorrichtung 6 an der Unterseite des Schachtquerträgers 25 weist eine Klemmschiene 13 auf, mit der das Membranelement 5' an die Unterseite des Mittelstegs 250 klemmbar ist. Die Klemmschiene 13, die bevorzugt aus einem Flacheisen gebildet ist, weist, wie in Fig.3 gezeigt, ihrerseits mehrere beabstandete Löcher 11 auf, wobei entsprechende Löcher 110 (Fig.1) im Membranelement 5 und entsprechende Löcher 111 (Fig.6) im Schachtquerträger 25 vorgesehen sind, sodass das Membranelement 5 zusammen mit der Klemmschiene 13 in einem Randbereich durch mehrere Gewindebolzen 40 an den Schachtquerträger 25 klemmbar ist.

Auf der Klemmseite des Membranelements 5' ist eine durch Umschlagen und Verschweißen des Membranrandes ausgebildete längliche Tasche 18 (Fig.2) vorgesehen, die an ihren Enden offen ist und in welche ein Keder 14 einbringbar ist, um im geklemmten Zustand (Fig.6) ein Einziehen des Membranelements 5' unter die Klemmschiene 13 zu verhindern.

Auf der Spannseite des Membranelements 5 ist eine durch Umschlagen und Verschweißen des Membranrandes ausgebildete Lasche 16 (Fig.2) vorgesehen, die an ihren Enden offen ist, wobei quer zur Längsachse der Lasche ausgebildete, parallele Langlochausschnitte 17 (Fig.1) ausgebildet sind, in die Ringschrauben, welche jeweils einen Ringkopf 33 (Fig.6) und einen der Gewindebolzen 40 umfassen, mit ihrem Ringkopf 33 einlegbar sind, sodass ein Rundstab 15 durch die Lasche 16 und die Ringköpfe 33 hindurchgeführt werden kann (Fig.6) und die zugehörigen Gewindebolzen 40 durch die Löcher 111 in dem Schachtquerträger 25 einführbar sind, wo sie mit Muttern 41 an der Unterseite des Schachtquerträgers 25 anziehbar sind, wodurch die Membranspannung einstellbar ist. Mittels an der Oberseite des Schachtquerträgers 25 vorgesehenen Kontermuttern 42 wird die eingestellte Spannungsstellung der Gewindebolzen 40 fixiert.

In gleicher Weise erfolgt die Montage der jeweiligen Klemmvorrichtung 6 und Spannvorrichtung 7 an der Unterseite bzw. Oberseite des nächsten darüberliegenden Schachtquerträgers 26 in Fig.9, um dann die Membran 5, zwischen den Schachtquerträgern 25 und 26 aufzuspannen, bzw. in gleicher Weise mit weiteren darunter und darüber angeordneten Schachtquerträgern.

Bei der Montage werden die Schachtquerträger 25, 26, 27 horizontal an der vorgegebenen Position eingebaut. Das Flacheisen 13 mit den vorgefertigten Löchern 11 für die Spannringschrauben wird mittig auf der Unterseite des jeweiligen Stahlquerträger 25, 26, 27 aufgelegt und die Löcher des Flacheisens 13 auf den Querträger 25, 26, 27 übertragen. Am Querträger werden dann die entsprechenden Löcher 111 gebohrt. Bauseits muss geprüft werden, ob die Löcher die Statik des Querträgers 25, 26, 27 beeinflussen. In die Membran 5 werden in die Langlanglochausschnitte 17 die Ringköpfe 33 eingelegt und mit dem Rundstab 15, der z.B. aus Stahl gebildet ist, der durch die Membranlasche 16 und die Ringköpfe 33 durchgeführt wird, vormontiert.

Das Membranelement 5 wird dann mit den Gewindebolzen 40, an denen die Ringköpfe 33 angebracht sind, durch den Querträger 25 geführt und gleichzeitig mit dem unteren Membranelement 5' und der Klemmschiene 13 verschraubt.

Damit das Membranelement 5' beim Klemmen nicht aus der Position gezogen wird ist die Befestigungsseite des Membranelements 5' zusätzlich mit dem Keder 14 versehen, der ein Einziehen des Membranelements 5' unter die Klemmschiene 13 verhindert.

Die Kombination aus Klemmung und Spannung ergibt dann die Membranspannung mit welcher die Membranelemente 5, 5' den Schutz des Schachtes und der Mitarbeiter dienen soll.

Das Membranelement 5, 5' wird mit einer vorgegebenen Spannkraft von x NM gespannt. Wenn die Spannkraft erreicht ist, wird die Befestigung mit den Kontermuttern 42 an der Oberseite des Querträgers 25 fixiert. Seitlich wird dann das Membranelement über eine oder mehrere konfektionierte Laschen 120 (Fig.7) auf halber Höhe mit der jeweils benachbarten Schachtwand verdübelt. Es können aber auch mehrere Laschen auf die Spannhöhe verteilt angeordnet sein, z.B. jeweils auf einem Drittel und zwei Dritteln der Spannhöhe oder es kann ein noch höhere Unterteilung gewählt sein. Das unterste Membranelement wird auf den Schachtboden gedübelt, das oberste Membranelement an die Schachtdecke.

## Patentansprüche

1. Schachttrennelement (1) zum Einbau in einen Schacht, der mehrere voneinander beabstandete Schachtquerträger (25, 26, 27) aufweist, **dadurch gekennzeichnet, dass** das Schachttrennelement (1) aus einem hochreißfesten Membranelement (5, 5') gebildet ist, das zwischen jeweils zwei Schachtquerträger (25, 26, 27) einspannbar ist, um jeweils die dazwischenliegende Durchgangsöffnung abzudecken, und dass eine Klemmvorrichtung (6) zum Klemmen des Membranelements (5, 5') an einer Seite und eine Spannvorrichtung (7) zum Spannen des Membranelements (5, 5') an der gegenüberliegenden anderen Seite vorgesehen sind.

2. Schachttrennelement nach Anspruch 1, **dadurch gekennzeichnet, dass** das Membranelement (5) an der einen Seite mittels der Klemmvorrichtung (6) an einen der Schachtquerträger (26) klemmbar ist und an der gegenüberliegenden anderen Seite mittels der Spannvorrichtung (7) am benachbarten Schachtquerträger (25) spannbar ist.

3. Schachttrennelement nach Anspruch 1 oder 2, **dadurch gekennzeichnet, dass** die Klemmvorrichtung eine Klemmschiene (13) umfasst, mit der das Membranelement (5, 5') klemmbar ist.

4. Schachttrennelement nach Anspruch 3, **dadurch gekennzeichnet, dass** die Klemmschiene (13) mehrere beabstandete Löcher (11) aufweist und entsprechende Löcher (111) auf dem Membranelement (5, 5') und den Schachtquerträgern (25, 26, 27) vorgesehen sind, sodass das Membranelement (5, 5') zusammen mit der Klemmschiene (13) durch Gewindebolzen (40) an den Schachtquerträger (25) klemmbar ist.

5. Schachttrennelement nach Anspruch 3 oder 4, **dadurch gekennzeichnet, dass** die Klemmschiene (13) aus einem Flacheisen gebildet ist.

6. Schachttrennelement nach einem der vorhergehenden Ansprüche, **dadurch gekennzeichnet, dass** auf der Klemmseite des Membranelements (5, 5') eine durch Umschlagen und Verschweißen des Membranrandes ausgebildete Tasche (18) vorgesehen ist, in welche ein Keder (14) einbringbar ist, um ein Einziehen des Membranelements (5, 5') unter die Klemmschiene (13) zu verhindern.

7. Schachttrennelement nach einem der vorhergehenden Ansprüche, **dadurch gekennzeichnet, dass** auf der Spannseite des Membranelements (5, 5') eine durch Umschlagen und Verschweißen des Membranrandes ausgebildete Lasche (16) vorgesehen ist, wobei quer zur Längsachse der Lasche (16) ausgebildete, parallele Langlochausschnitte (17) ausgebildet sind, in die Ringschrauben, welche jeweils einen Ringkopf (33) und einen Gewindebolzen (40) umfassen, mit ihrem Ringkopf (33) einlegbar sind, sodass ein Rundstab (15) durch die Lasche (16) und die Ringköpfe (33) hindurchführbar ist und die zugehörigen Gewindebolzen (40) durch Löcher in dem Schachtquerträger einführbar, wo sie mit Muttern an der Unterseite des Schachtquerträgers anziehbar sind, wodurch die Membranspannung einstellbar.

8. Schachttrennelement nach einem der vorhergehenden Ansprüche, **dadurch gekennzeichnet, dass** das Membranelement (5, 5') jeweils randseitig mit einer oder mehreren Lasche (120) an einer benachbarten Schachtwand befestigbar ist, um ein seitliches Durchfallen von Objekten verhindert wird.
